# EUROPEAN PATENT SPECIFICATION

(11) **EP 0 782 555 B1**
(45) Date of publication and mention of the grant of the patent: **17.03.2004**
(21) Application number: 94907340.7
(22) Date of filing: 24.01.1994
(51) Int. Cl.: C04B 35/58, C09K 3/00, C04B 35/591

(54) **PROCESSES FOR PREPARING A BASE NITRIDABLE SILICON-CONTAINING MATERIAL AND SILICON NITRIDE MATERIALS**
VERFAHREN ZUR HERSTELLUNG EINES SILICIUMHALTIGEN NITRIDIERBAREN BASISMATERIALS UND VON SILICIUMNITRIDMATERIALIEN
PROCEDE DE PREPARATION D'UN MATERIAU NITRURABLE DE BASE CONTENANT DU SILICIUM ET PREPARATION DES MATERIAUX EN NITRURE DE SILICIUM

(43) Date of publication of application: 09.07.1997
(73) Proprietor: EATON CORPORATION, Cleveland, Ohio 44114-2584 (US)
(72) Inventor: EDLER, James, P., Troy, MI 48098 (US); LISOWSKY, Bohdan, Troy, MI 48084 (US)
(74) Representative: West, Alan Harry
(86) International application number: PCT/US1994/000958
(87) International publication number: WO 1994/017011

(56) References cited:
- US-A- 4 443 394
- US-A- 4 455 275
- US-A- 4 492 665
- US-A- 4 781 874
- US-A- 4 820 665
- US-A- 4 943 401
- US-A- 5 055 432
- US-A- 5 079 198
- US-A- 5 120 328
- US-A- 5 156 830
- US-A- 5 160 719
- US-A- 5 166 106
- US-A- 5 187 129
- US-A- 5 213 729
- US-A- 5 252 248
- CERAMIC BULLETIN, Volume 62, No. 5, published 1983, R.M. WILLIAMS et al., "Slip Casting of Silicon Shapes and their Nitriding", pages 607-610 and 619.

## Description

This invention relates generally to methods of preparing a nitridable silicon-containing material, methods of preparing alpha-phase silicon nitride, methods of preparing non-densified beta-phase silicon nitride, and methods of preparing densified beta-phase silicon nitride.

It has long been recognized that silicon nitride has particular utility with critically engineered applications, including, but not limited to engine components and cutting tools. Further uses for prepared silicon nitride include: motor parts, ones that cannot be magnetic, or ones that are resistant to extreme thermal cycling; turbine blade and other aircraft components, because the ceramic silicon nitride is lightweight and strong; fuel and exhaust filters for trucks and automotive applications; and many other uses that are too numerous to list. Each use may require different physical properties specific to that application. For that reason, many different additives may need to be incorporated into the silicon nitride matrix to achieve those goals. In essence, the end user should be able to "shop" from a list of additives in order to realize the best physical properties from the silicon nitride material. It may be most useful to some end users to buy the basic silicon nitride precursor materials along with the additives they need so that they can easily and inexpensively do most of the manufacturing themselves, without the cost of paying someone else to do the work.

In general, a single manufacturing facility fabricates completed silicon nitride powder and/or articles, requiring a great deal of investment, machinery, skilled labor, and facilities. It is anticipated that future facilities may necessitate the need of a silicon nitride starting material, i.e. one that has been preprocessed, so that end users may perform the final processing steps in order to achieve the manufactured item that they desire.

Prior to our invention, a problem existed because reaction bonded silicon nitride was commonly prepared by reacting and nitriding the silicon (either as a powder or as a formed article) with nitrogen by exposing the silicon to a nitrogen-containing atmosphere at temperatures of 1100°C to about 1420°C for very long periods of time. It is not uncommon for the nitriding time in prior art methods to be 100-200 hours. That time period is too long.

Potential end processors would be able to purchase the nitridable silicon-containing starting material, along with various additives, including nitriding agents, densification aids, and other processing aids, such as lubricants, binders, and other organic materials, which would be able to produce a desired material specific for their application. The end user would not need to purchase all of the reaction equipment which is necessary for producing the nitridable silicon-containing material. Rather, they would be required to purchase a small mixer and could mix in any combination of additives which they may desire. Thereafter, they could form articles from the silicon-containing material and nitride them in their desired shape. Thereafter, as is well known in the art, they could sinter the material to form a densified silicon nitride material which is relatively high in strength.

Previous inventions (see e.g. US-A-5 252 248) made by the present inventors, Edler and Lisowsky, teach superior methods of preparing nitridable silicon or silicon nitride by comminuting mixtures of silicon powder and water in a slurry form, typically from 40 to 90 volume percent water and from 10 to 60 volume percent silicon powder. These previous methods have greatly reduced the time needed for manufacturing. However, it has been discovered that it may be desirable to employ a mixture which contains less water while still achieving the benefits of the faster nitriding times experienced with the methods of the above-mentioned inventions.

Using less water in the comminuted mixture correlates with less water removal necessary, thereby realizing a savings in energy costs. Furthermore, some manufacturers may possess processing equipment which is designed to comminute and mix non-slurry mixtures, and, so, non-slurry mixtures would be desirable to these manufacturers. Another advantage of employing non-slurry mixtures is that these mixtures could be processed directly by forming processes, such as extrusion, compression molding, jigging, or ram forming without intervening processing steps.

The present method prepares a silicon-containing material which is formed from less expensive and more readily available materials than prior art materials and which uses considerably less processing time than those used in prior art methods.

A method for preparing a silicon-containing material, that can be later nitrided into silicon nitride, begins with comminuting (i) silicon particles with (ii) 0.5 to 20 volume percent water to react the silicon particles with the water. A dispersing agent, such as Darvan No. 6, a registered trademark of the R. T. Vanderbilt Company, Inc. , may be added initially to aid the comminution. Comminution of the operative chemical compounds with water is conducted for a period of 1 to 5 hours, to produce a reacted silicon-based mixture.

Organic additives such as binders, plasticizers, viscosity modifiers, and other dispersing agents may be added to the mixture at the beginning of the processing, toward the end of the comminution, or after the comminution. The mixture may then be aged for a period of 12 to 24 hours to allow the reaction of the silicon with the water to substantially reach completion which is believed to provide a silicon oxyhydrate coating on the silicon. The aged mixture may then be dried by spray drying or any other suitable technique and formed into a green body, if desired, such as by compaction of the resultant spray-dried granules. Extrusion, compression molding or any other known method for forming green ceramic bodies may likewise be employed after suitable formulation with appropriate processing aids, like binders.

Nitridation and/or densification aids may be added before or after the silicon particles and water have been comminuted in order to suit the needs of the customer. It is envisioned that a customer would purchase this base starting material of nitridable silicon-containing material, whether or not it includes nitriding agents or densification aids, and individually purchase additives, such as whisker or particulate reinforcements, nitridation and/or densification agents, or any organic additives, and then process their desired products using the formulas as disclosed herein, or utilizing their own technology. As can be imagined by one of ordinary skill in the art, a customer may find it easier to purchase a base nitridable silicon-containing powder or mixture with nitriding agents included, and then select individual additives for their own purposes. Processing such as extrusion, compression molding, compaction, machining and sintering would take place on site in their facilities. That way the customer would not need to invest in the comminution equipment and they could concentrate on manufacturing a finished product instead of preparing the precursor materials. The inclusion of the additives may take place before the aging step or after. Densification aids may be added at any time during the procedure. It is not necessary for densification aids or the other additives to be comminuted with the silicon powder and the water. Furthermore, additives such as inorganic refractory filler material may be added to the silicon-water mixture or the dried powder resulting therefrom.

The present inventive process includes comminuting silicon particles with between 0.5 and 20 volume percent water, the comminuting being performed to form fresh, non-oxidized surfaces on the silicon particles and to allow substantial chemical reaction between the silicon particles and the water, and thereafter reducing the water content of the reacted mixture to a degree sufficient to form a dry mass.

The mixture contains silicon particles from 5 to 99.5 volume percent and water from 0.5 to 20 volume percent. Preferably, the silicon particles are less than about 99 volume percent and the water is present in the mixture in an amount greater than about 1 volume percent. Most preferred, the water is present in the mixture in an amount less than 10 volume percent.

Therefore, in general, the silicon-water mixture contains at least 5 volume percent silicon particles and at least 0.5 volume percent water, with the remainder of the mixture (at most 94.5 volume percent) being additives such as nitriding agents, densification aids, organic materials, and inorganic refractory filler material.

The silicon particles used in practicing our invention may be commercial-grade silicon powder and preferably have a particle size of less than 20 micrometers.

For comminuting, any suitable comminution device may be used such as a ball mill, rod mill, vibratory grinder, Union Process grinder, jet mill, cone grinder, jaw crusher, and hammer mill. At the higher levels of water, the mixture is preferably prepared in a ball mill which is 25-50 volume % filled with milling media and 25-50 volume % filled with the slurry.

The comminuting of the silicon in the presence of water is an important step, as it is believed that the comminuting creates fresh, unoxidized surfaces on the silicon powder particles for vigorous reaction with the water. Merely mixing silicon powder, whether or not pre-ground, with water does not appear to create the fast, vigorous reaction that comminuting provides. Pre-ground silicon powder is not as reactive toward water because silicon, being a highly reactive metal, readily oxidizes in air during storage. Thus, a passivating layer of silicon oxide is formed on the outside of the silicon particles, thereby rendering the silicon not nearly as reactive as unoxidized silicon such as is created during the comminution step.

In addition, certain desired additives such as nitriding agents, densification aids, organic binders inorganic refractory filler material and the like may be included. These additives may include at least one nitriding agent added at about 0.1 to 7 volume percent based upon the volume of the resultant dry mass to aid in any later nitriding process. The at least one nitriding agent may be selected from the group consisting of iron oxides, lead oxides, nickel carbonyl, nickel oxides, silicon carbide, graphite, carbon, aluminum oxides, Fe₂O₃, NiO, CoO, CaF, PbO, Li₂O, Na₂O, K₂O, BaO, BN, albite (NaAlSi₃O₈), orthclase (KAlSi₃O₈), anorthite (CaAl₂Si₂O₈), nepheline syenite, talc, borax, soda ash, Pb₃O₄, alpha-phase Si₃N₄ and mixtures thereof.

The additives may also include at least one densification aid which may be employed in an amount to achieve 4 to 16 volume percent based on the volume of the resulting dry mass. The densification aid may be selected from the group consisting of alumina, rare earth metal oxides, yttrium oxide, magnesium oxide, zirconium oxide, lanthanum oxide, titanium oxide, barium oxide, strontium oxide, cerium oxide, scandium oxide, boron oxide, beryllium oxide, chromium oxide, calcium oxide, vanadium oxide, manganese oxide, magnesium nitride, aluminum nitride, MgSi, MgAl₂O₄, and mixtures thereof.

The additives may also include up to 94.5 volume percent of at least one inorganic refractory filler material. Examples of inorganic refractory filler materials include alumina fibers, chrome oxide, chromite, chromium carbide, silicon carbide (refractory grain), fused magnesia, dead-burned magnesite, fused alumina, tabular alumina, beta silicon nitride, mullite, fused mullite, calcined alumina, forsterite, chrome-magnesite, alundum, zircon, silicon carbide (abrasive grain), cubic boron nitride, diamond, fused stabilized zirconia, graphite, refractory metals, such as tungsten and molybdenum, refractory metal fiber, ceramic fiber, mullite fiber, silicon carbide fiber, aluminum nitride, fused rare earth oxides, rare earth oxides, rare earth carbides, titanium dioxide, yttrium oxide, yttrium carbide, calcium oxide, dead-burned limestone, dead-burned dolomite, dead-burned calcite, calcined metal oxides, fused metal oxides, hafnia, thoria, urania, boron carbide, titalum carbide, titanium carbide, uranium carbide, tungsten carbide, molybdenum carbide, zirconium carbide, magnesia-alumina spinels, calcined bauxite, rutile, metal nitrides, and alpha-silicon nitride. In refractory and cutting tool composite bodies which are formed from mixtures which contain inorganic refractory filler material, the silicon nitride formed from nitriding the wet-comminuted silicon metal acts to bind the inorganic refractory filler material together.

The included inorganic refractory filler material may be comprised of a homogeneous particle size range and shape or a plurality of particle size ranges and shapes. For example, a homogeneous particle size range and shape use is illustrated by a vitreous-bonded silicon carbide grinding wheel wherein silicon carbide abrasive grain of a homogeneous particle size range and shape is bonded together with a clay-based material. On the other hand, a plurality of particle size ranges and shapes used in concrete wherein a coarse aggregate (gravel) is bonded with a fine aggregate (sand) by Portland cement. The silicon nitride prepared by the present invention, may be used to replace, in part or in full, the bonding materials utilized in the above-mentioned products, i.e., the vitreous clay for the grinding wheel, the Portland cement for the concrete, and the metallic cobalt/nickel for the cutting tool and cemented carbide. It is envisioned that refractories, cutting tools, and wear-resistant composite bodies will be fabricated making use of the inclusion of inorganic refractory filler material into the silicon mass either prior to or after the low-water comminution.

After comminuting, the mixture may be allowed to react further by aging. It is believed that the silicon is chemically reacting with the water during the aging step to form a silicon oxyhydrate coating on the silicon particles and also releasing hydrogen gas as a product of the reaction. During aging, the mixture appears to increase in volume through frothing, and, subsequently, the evolution of gas and frothing subside after about 12 hours as the reaction nears completion.

After aging, the reacted mixture is typically dried and formed, if desired, in preparation for a subsequent nitriding step. The mixture could be dried for further formulation and use in extrusion or compression molding of shapes. If binders are included, the compact will have a sufficient strength to allow machining without the need for special heat treatments by partially nitriding or sintering the silicon compact. Preferably, required machining is completed on the silicon green body prior to nitriding, rather than on the harder silicon nitride part.

The powder or the formed parts may then be put into a furnace to burn off any organic additives contained therein, if used. The furnace is first typically evacuated and preferably filled with a combustible gas atmosphere such as pure hydrogen gas. The temperature of the furnace is then increased from room temperature to about 1000°C over about 1 to 5 hours, while flowing the combustible gas therethrough at atmospheric pressure, by a nearly linear progression of increasing temperature, to burn off the organic additive materials without causing any substantial damage to the powder or formed parts. The substantially non-toxic effluent which is vented includes carbon dioxide and water.

The furnace may then be purged with flowing nitrogen to obtain a noncombustible atmosphere and evacuated again to remove the nitrogen and any remaining effluent. For heavily loaded furnaces, helium gas may be added, typically up to a pressure of 50 KPa absolute. Then nitrogen and hydrogen gases are added to develop an atmosphere containing 4-6% hydrogen with the remainder of the nitriding atmosphere being nitrogen. Nitrogen is admitted to the furnace until the pressure is preferably slightly above atmospheric pressure (approximately 120 KPa absolute) to avoid any leakage of ambient air into the furnace. The nitriding atmosphere preferably comprises from about 40 to about 60 mole percent nitrogen, from about 40 to about 60 mole percent helium, and from about 1 to about 6 percent hydrogen. The preferred resulting partial pressure of the above-described nitriding atmosphere constituents are nitrogen, helium and hydrogen at 48%, 50% and 2%, respectively. For lightly loaded furnace runs, a nitriding atmosphere comprising nitrogen with 1-10% hydrogen and 90-99% nitrogen, without helium, is preferred.

The temperature is then preferably increased from 1000°C to a nitriding temperature of between 1350°C and 1450°C, preferably about 1420°C, at a linear rate of about 5°C to 50°C/hr, although 15°C to 25°C per hour is most preferred. During this heating cycle, nitrogen is consumed by the silicon to form silicon nitride. The nitriding atmosphere composition in the furnace atmosphere is kept substantially constant by monitored addition of substantially pure nitrogen gas into the furnace to maintain the slightly greater than atmospheric pressure. Once the upper nitriding temperature is reached, the temperature is maintained for less than 2 hours, and preferably immediately upon reaching the upper nitriding temperature the heat source is shut off and the silicon nitride articles are allowed to cool. This nitriding step produces a mass of silicon nitride material which is predominantly in the alpha-phase.

After the nitriding step, the resultant alpha-phase silicon nitride mass is converted to beta-phase silicon nitride at a conversion temperature of from 1450°C to 2100°C. The conversion generally includes utilizing at least a nitrogen-containing atmosphere, and more specifically, may include nitrogen and helium, nitrogen and hydrogen, nitrogen, helium and hydrogen, or it may include the same atmosphere as the nitriding atmospheric gas used during the nitriding step. The conversion step may also utilize an atmosphere containing substantially pure nitrogen.

The conversion step may be performed under vacuum from the end of the nitriding step to the beginning of the conversion step, followed by an atmosphere containing at least nitrogen admitted during the duration of the conversion step. In addition, the conversion step may be accomplished while utilizing the above-described conversion atmosphere at a pressure of from vacuum to about atmospheric pressure, or from atmospheric to about 1140 kPa (150 psig), and preferably at a partial pressure of about atmospheric to 450 kPa (50 psig) or greater than 450 kPa (50 psig) while utilizing at least nitrogen in the conversion atmosphere.

Specifically, it is preferred that the conversion step be accomplished while heating from the temperature achieved at the end of the nitriding step to the beginning of the conversion step at an increasing rate of from about 100°C to about 1250°C per hour until an elevated temperature of about 1450°C to about 2100°C is reached. The temperature may increase at a rate from about 300°C to about 1000°C per hour until the elevated temperature is reached. Preferably, the increasing rate is at about 300 to 500°C per hour until the elevated temperature is reached. The conversion step is accomplished by maintaining a temperature of between 1450°C to 2100°C, and preferably between about 1650°C to about 1850°C until substantially all of the silicon nitride in the alpha phase is converted to non-densified beta-phase silicon nitride. This is done by maintaining the conversion temperature for about 0.3 to about 20 hours until substantially all of the conversion takes place, preferably from about 1 to about 10 hours, and most preferably, between about 1 to 4 hours.

After the conversion step, a cooling down step may also be included which cools down the resulting non-densified silicon nitride mass from the conversion temperature back to room temperature at a rate of from about 250°C to about 1250°C per hour, preferably from about 500°C to about 1000°C per hour, more preferably at about 500°C per hour until room temperature is reached. The non-densified beta-phase silicon nitride material which results from this method is expected to find particular utility in applications which require a stable high temperature material.

Alternatively, after the nitriding step, the silicon nitride material may be sintered to a densified predominantly beta-phase silicon nitride material, if the mass nitrided contained therein at least one densification aid. The sintering procedure follows the above-described conversion procedure.

The following examples are illustrative only of various possible recipes and their resulting properties.

### EXAMPLES

Because strength testing cannot be done on the powder material of the present invention, tests were performed on various possible end products which would be made by the customers with their own particular processing or formulation. The following examples illustrate the use of various nitriding agents and the inclusion of densification aids with the silicon powder to show the results of anticipated end products. Some examples describe the combination of iron oxide, yttria, and alumina as liquid forming agents which aid in the densification during sintering.

### Example 1

Four lots, lots A-D, of silicon-low water mixtures were comminuted to prepare compositions suitable for conversion into silicon nitride. Target water contents for each of the four lots were: 20%, 10%, 5% and 1% by volume. Silicon powder, available from Globe Metallurgical, with a chemistry of Si: 99.67 wt %, Fe: 0.24 wt %, Al:0.06 wt %, Ca:0.02 wt %, and C:0.07 wt % and a size of approximately 4 mm (4.9 mesh size); iron oxide, Pfizer-grade R2199; and water, deionized Detroit city water, were used for the compositions. The as-received silicon powder for the four lots was placed into a stainless steel container and heated at 71°C (160 degrees Fahrenheit) for 39.5 hours to thoroughly dry the silicon powder. From the drying, it was determined that the silicon powder as received from Globe contained 0.09 weight percent volatiles. The dried silicon powder was used to produce the four (4) lots of low-water, comminuted silicon powder for this example.

A porcelain ball mill jar, 280 mm (11 inches) in diameter and 180 mm (7 inches) in height, filled with 7.35 kg (16.21 pounds) of 19 mm (3/4 inch) diameter round high alumina balls, rotated at 52 RPM, was used to comminute the silicon-water mixtures.

Each lot of silicon-water mixture, lots A-D, employed 1000 g silicon powder. Lot A employed about 85.8 g water, lot B employed about 42.9 g water, lot C employed about 21.5 g water, and lot D employed about 4.3 g water.

In all four lots the water was sprayed into the jar mill containing the silicon powder while stirring the alumina balls-silicon powder contents prior to comminution so as to distribute the water evenly into the silicon powder thus making the water available for reaction with the freshly comminuted silicon metal particles during and after the comminution. The silicon-water mixtures were comminuted for about 2 hours. Upon completion of the comminution, a sample of the wet powder was taken, weighed, dried and reweighed, to determine the actual amount of water in the wet mix.

### Preparation procedure:

Into the porcelain ball mill was placed 1000 grams of dried silicon powder and 30 grams of iron oxide nitriding agent. The required amount of deionized water to achieve approximately the batch target volume percentage was sprayed into the jar mill as previously described. The mill was then sealed, and comminution of the silicon-water mixture proceeded for approximately two hours. One venting of the mill took place approximately one hour after the start-up of the mill. Upon completion of the comminuting, the resultant wet comminuted mass was separated from the balls of the mill, and sample of the resultant material dried for 15 hour at 99°C (210 degrees Fahrenheit) to determine the actual water content after milling.

The remaining comminuted wet silicon mixture was aged in plastic bags for approximately 17 hours and die pressed into flexural bend test bars measuring 58 mm (2.3 inches) in length by 5.9 mm (0.232 inches) in width by 4.3 mm to 5.6 mm (0.170 to 0.220 inches) in thickness using a 60 Ton Alpha press operating at an indicated pressing force of 5350 kg (5.9 tons) resulting in a calculated pressing pressure of 156 MPa (22,700 psi). The resulting test bars were dried in an oven at 84°C (184 degrees Fahrenheit) for 18.5 hours to remove any unreacted water.

Seven dried flexure test bars from each of the 4 lots of powder were weighed so that the weight change due to nitridation could be calculated, then placed onto non-densified beta-phase silicon nitride setters and loaded into the nitriding furnace for conversion to silicon nitride. The test bars were nitrided by first heating in a combustible flowing atmosphere comprising hydrogen gas to which nitrogen gas is added. The temperature in the furnace was increased from room temperature to 1000 degrees Celsius at a linear rate of 500 degrees Celsius per hour. Then the furnace atmosphere composition was changed from a combustible hydrogen-nitrogen mixture to one of approximately 95% nitrogen and 5% hydrogen, and the temperature was increased from 1000 degrees to 1420 degrees Celsius at a linear rate of 15 degrees Celsius per hour while maintaining a constant partial pressure of nitrogen in the furnace. The furnace was then allowed to cool to room temperature. At the conclusion of the nitridation, the test bars which had been weighed prior to nitridation were reweighed and the weight gain which is due to the chemical change of the silicon metal to silicon nitride is reported in Table I.

**TABLE I**

| Lot ID | Target Volume Percent Water | Measured Volume Percent Water* | Average Percent Weight Gain |
|---|---|---|---|
| A | 20 | 23.6 | 57.3 |
| B | 10 | 8.8 | 57.3 |
| C | 5 | 3.7 | 57.7 |
| D | 1 | 0.4 | 58.5 |

| | | | |
|---|---|---|---|
| *Measured after the comminution | | | |

The weight gain percentages shown in Table I indicate a high conversion of the silicon to silicon nitride. The theoretical maximum percent weight gain for the conversion of silicon metal to silicon nitride is 66.7%. Because of the presence of iron oxide and water reaction products resulting from the reaction of the silicon metal with the water, the expected weight gain is lower than the theoretical. As an example of the weight gain typical for a slurry-comminuted and spray-dried product, eight standard flexure test bars fabricated from a composition comminuted having between about 55 and 70 volume percent water and spray-dried were nitrided along with the low-water comminuted lots and their average percentage of weight gain was 52.3%. The slurry composition, in addition to the silicon, water, and iron oxide nitriding aid, contained 4 weight percent organic binder and dispersant.

## Claims

1. A process for preparing silicon for forming a ceramic precursor, including comminuting silicon particles, the process comprising:
comminuting silicon particles in a mixture with water for substantial reaction with the water to provide a nitridable silicon-containing material, wherein the silicon particles are present in the mixture from 5 to 99.5 volume percent and the water is present in the mixture from 0.5 to 20 volume percent.

2. A process according to claim 1, wherein the reaction between the silicon particles and the water is indicated by the evolution of gas, and wherein the process further comprises the step of aging the mixture after comminuting the silicon particles, in the absence of comminuting, for a period of time sufficient to allow the reaction between the silicon particles and the water to substantially reach completion as indicated by subsiding of the evolution of gas.

3. A process according to claim 1 or claim 2, further comprising the step of reducing the water content of the reacted mixture to a degree sufficient to form a dry mass which may thereafter be nitrided.

4. A process according to claim 3, wherein there is added to the mixture before or after comminution at least one nitriding agent.

5. A process according to claim 4, wherein the nitriding agent is selected from iron oxides, lead oxides, nickel carbonyl, nickel oxides, silicon carbide, graphite, carbon, aluminum oxides, CoO, CaF, Li₂O, Na₂O, K₂O, BaO, BN, albite (NaAlSi₃O₈), orthclase (KalSi₃O₈), anorthite (CaAl₂Si₂O₈), nepheline syenite, talc, borax, soda ash, alpha-phase silicon nitride and mixtures thereof.

6. A process according to claim 4 or claim 5, wherein the amount of nitriding agent is 0.1 to 7 volume percent based on the resultant dry mass.

7. A process according to any one of claims 3 to 6, wherein there is added to the mixture before or after comminution at most 94.5 volume percent of at least one inorganic refractory filler material selected from alumina fibers, chrome oxide, chromite, chromium carbide, silicon carbide, fused magnesia, dead-burned magnesite, fused alumina, tabular alumina, mullite, calcined alumina, forsterite, chrome-magnesite, alundum, zircon, cubic boron nitride, diamond, fused stabilized zirconia, graphite, refractory metals, cedramic fiber, mullite fiber, rare earth oxides, rare earth carbides, titanium dioxide, yttrium oxide, yttrium carbide, calcium oxide, dead-burned limestone, dead-burned dolomite, dead-burned calcite, calcined metal oxides, fused metal oxides, hafnia, thoria, urania, boron carbide, titalum carbide, titanium carbide, uranium carbide, tungsten carbide, molybdenum carbide, zirconium carbide, magnesia-alumina spinels, calcined bauxite, rutile and metal nitrides.

8. A process according to any one of claims 3 to 7, wherein there is added to the mixture before or after comminution at least one densification aid.

9. A process according to claim 8, wherein the densification aid is added in an amount of 4 to 16 volume percent based on the resultant dry mass, the densification aid being selected from alumina, rare earth metal oxides, yttrium oxide, magnesium oxide, zirconium oxide, lanthanum oxide, titanium oxide, barium oxide, strontium oxide, cerium oxide, scandium oxide, boron oxide, beryllium oxide, chromium oxide, calcium oxide, vanadium oxide, manganese oxide, magnesium nitride, aluminum nitride, MgSi, MgAl₂O₄ and mixtures thereof.

10. A process for making high alpha-phase content silicon nitride, comprising nitriding the dry mass obtained by the process according to any one of claims 3 to 9 by exposure to a sufficient amount of nitriding gas including at least nitrogen at a sufficient temperature for a sufficient length of time to form a mass of substantially silicon nitride.

11. A process for making non-densified beta-phase silicon nitride material comprising subjecting the substantially alpha-phase silicon nitride obtained in claim 10 to a temperature of 1450 to 2100°C for a sufficient length of time to convert the silicon nitride from a predominantly alpha-phase material into a predominantly non-densified beta-phase silicon nitride material.

12. A process according to claim 11, wherein nitriding is performed in a nitriding gas of 40 to 60 mole percent nitrogen, 40 to 60 mole percent helium and 1 to 6 mole percent hydrogen, while heating from 1000°C at a substantially linear increasing temperature rate of 5 to 50°C per hour until an elevated temperature of 1350 to 1450°C is reached.

13. A process according to claim 11, wherein nitriding is performed in a nitriding gas of 90 to 99 mole percent nitrogen and 1 to 10 mole percent hydrogen, while heating from 1000°C at a substantially linear increasing temperature rate of 5 to 50°C per hour until an elevated temperature of 1350 to 1450°C is reached.

14. A process for making densified beta-phase silicon nitride material comprising subjecting the alpha-phase silicon nitride material obtained in claim 10 to a temperature of 1450 to 2100°C for a sufficient length of time to convert the silicon nitride from a predominantly alpha-phase material into a predominantly beta-phase silicon nitride material exhibiting a decrease in bulk volume of the silicon nitride due to densification.

## Patentansprüche

1. Verfahren zur Herstellung von Silizium zur Bildung einer keramischen Vorstufe, einschließlich des Zerkleinerns von Siliziumteilchen, wobei das Verfahren umfasst:
Zerkleinern von Siliziumteilchen in einem Gemisch mit Wasser zur wesentlichen Reaktion mit dem Wasser, um ein nitrierbares Silizium enthaltendes Material bereitzustellen, wobei die Siliziumteilchen in dem Gemisch in einer Menge von 5 bis 99,5 Volumenprozent vorliegen und das Wasser in dem Gemisch in einer Menge von 0,5 bis 20 Volumenprozent vorliegt.

2. Verfahren nach Anspruch 1, wobei die Reaktion zwischen den Siliziumteilchen und dem Wasser durch die Freisetzung von Gas angezeigt wird und wobei das Verfahren weiterhin den Schritt der Alterung des Gemisches nach dem Zerkleinern der Siliziumteilchen umfasst in Abwesenheit eines Zerkleinerns zu einem Zeitraum, der ausreichend ist, um die Reaktionen zwischen den Siliziumteilchen und dem Wasser im wesentlichen zum Abschluss zu bringen, wie durch das Absinken der Freisetzung des Gases angezeigt wird.

3. Verfahren nach Anspruch 1 oder 2, weiterhin umfassend den Schritt der Verringerung des Wassergehalts in dem reagierten Gemisch zu einem Grad, der ausreichend ist, um eine Trockenmasse zu bilden, die danach nitriert werden kann.

4. Verfahren nach Anspruch 3, wobei vor oder nach der Zerkleinerung zu dem Gemisch wenigstens ein Nitriermittel zugefügt wird.

5. Verfahren nach Anspruch 4, wobei das Nitriermittel ausgewählt wird aus Eisenoxiden, Bleioxiden, Nickelcarbonyl, Nickeloxiden, Siliziumcarbid, Graphit, Kohlenstoff, Aluminiumoxiden, CoO, CaF, Li₂O, Na₂O, K₂O, BaO, BN, Albit (NaAlSi₃O₈), Orthclas (KalSi₃O₈), Anorthit (CaAl₂Si₂O₈), Nephelinsyenit, Talk, Borax, Soda-Asche, Alpha-Phasensiliziumnitrid und Gemische davon.

6. Verfahren nach Anspruch 4 oder 5, wobei die Menge des Nitriermittels 0,1 bis 7 Volumenprozent, bezogen auf die erhaltene Trockenmasse, beträgt.

7. Verfahren nach einem der Ansprüche 3 bis 3, wobei zu dem Gemisch vor oder nach der Zerkleinerung höchstens 94,5 Volumenprozent von wenigstens einem anorganischen feuerfesten Füllmaterial zugefügt wird, ausgewählt aus Aluminiumoxidfasern, Chromoxid, Chromit, Chromcarbid, Siliziumcarbid, Schmelzmagnesiumoxid, totgebrannntes Magnesit, Schmelzaluminiumoxid, tafelförmiges Aluminiumoxid, Mullit, calciniertes Aluminiumoxid, Forsterit, Chrom-Magnesit, Alundum, Zirkon, würfelförmiges Bornitrid, Diamant, schmelzstabilisierte Zirkonerde, Graphit, feuerfeste Metalle, Cedraminfasern, Mullitfasern, Seltenerdemetalloxide, Seltenerdemetallcarbide, Titandioxid, Yttriumoxid, Yttriumcarbid, Calciumoxid, totgebrannter Kalkstein, totgebrannter Dolomit, tototgebranntes Calcit, calcinierte Metalloxide, Schmelzmetalloxide, Hafnium-(IV)-oxid, Thoria, Uraniumdioxid, Borcarbid, Titaeumcarbid, Titancarbid, Urancarbid, Wolframcarbid, Molybdäncarbid, Zirkoncarbid, Magnesiumoxid-Aluminiumoxidspinelle, calciniertes Bauxit, Rutil und Metallnitride.

8. Verfahren nach einem der Ansprüche 3 bis 7, wobei zu dem Gemisch vor oder nach der Zerkleinerung wenigstens eine Verdichtungshilfe zugefügt wird.

9. Verfahren nach Anspruch 8, wobei die Verdichtungshilfe in einer Menge von 4 bis 16 Volumenprozent, bezogen auf die erhaltene Trockenmasse, zugefügt wird und die Verdichtungshilfe ausgewählt wird:
aus Aluminiumoxid, Seltenerdenmetalloxiden, Yttriumzoid, Magnesiumoxid, Zirkonoxid, Lanthanoxid, Titanoxid, Bariumoxid, Strontiumoxid, Cerioxid, Scandiumoxid, Boroxid, Berylliumoxid, Chromoxid, Calciumoxid, Vanadiumoxid, Managanoxid, Magnesiumnitrid, Aluminiumnitrid, MgSi, MgAl₂O₄ und Gemischen davon.

10. Verfahren zur Herstellung von Siliziumnitrid mit einem hohen Alpha-Phasengehalt, umfassend das Nitrieren der Trockenmasse, die nach dem Verfahren gemäss einem der Ansprüche 3 bis 9 erhalten wurde, durch Aussetzung gegenüber einer ausreichenden Menge eines Nitriergases, enthaltend wenigstens Stickstoff, in einer ausreichenden Menge, für einen ausreichenden Zeitraum, um eine Masse von im Wesentlichen Siliziumnitrid zu bilden.

11. Verfahren zur Herstellung von einem nicht verdichten Beta-Phasensiliziumnitridmaterial, umfassend das Aussetzen des im Wesentlichen Alpha-Phasensiliziumnitrids, das in Anspruch 10 erhalten wurde, gegenüber einer Temperatur von 1450 bis 2100°C für einen ausreichenden Zeitraum, um das Siliziumnitrid von einem im Wesentlichen Alpha-Phasenmaterial zu einem im Wesentlichen nicht verdichteten Beta-Phasensiliziumnitridmaterial umzuwandeln.

12. Verfahren nach Anspruch 11, wobei die Nitrierung in einem Nitriergas von 40 bis 60 Mol-% Stickstoff, 40 bis 60 Mol-% Helium und 1 bis 6 Mol-% Wasserstoff durchgeführt wird, während erhitzt wird von 1000°C mit einer im Wesentlichen linear ansteigenden Temperaturgeschwindigkeit von 5 bis 50°C pro Stunde, bis eine erhöhte Temperatur von 1350°C bis 1450°C erreicht wird.

13. Verfahren nach Anspruch 11, wobei die Nitrierung in einem Nitriergas von 90 bis 99 Mol-% Stickstoff und 1 bis 10 Mol-% Wasserstoff durchgeführt wird und während erhitzt wird von 1000°C mit einer im Wesentlichen linear ansteigenden Temperaturgeschwindigkeit von 5 bis 50°C pro Stunde, bis eine erhöhte Temperatur von 1350°C bis 1450°C erreicht wird.

14. Verfahren zur Herstellung von einem verdichteten Beta-Phasensiliziumnitridmaterial, umfassend das Aussetzen des Alpha-Phasensiliziumnitridmaterials, das in Anspruch 10 erhalten wird, gegenüber einer Temperatur von 1450 bis 2100°C für einen ausreichenden Zeitraum, um das Siliziumnitrid von einem Wesentlichen Alpha-Phasenmaterial zu einem im Wesentlichen Beta-Phasensiliziumnitridmaterial umzuwandeln, das eine Verringerung bezüglich des Massevolumens des Siliziumnitrids wegen der Verdichtung zeigt.

## Revendications

1. Procédé pour la préparation de silicium pour la formation d'un précurseur de céramique, incluant le concassage de particules de silicium, le procédé comprenant : le concassage des particules de silicium dans un mélange avec de l'eau pour une réaction substantielle avec l'eau pour fournir un matériau contenant du silicium nitrurable, dans lequel les particules de silicium sont présentes dans le mélange de 5 à 99,5 % du volume, et l'eau est présente dans le mélange de 0,5 à 20 % du volume.

2. Procédé selon la revendication 1, dans lequel la réaction entre les particules de silicium et l'eau est indiquée par l'évolution de gaz, et dans lequel le procédé comprend, en outre, l'étape de vieillissement du mélange après le concassage des particules de silicium, en l'absence de concassage, pendant une période de temps suffisante pour permettre la réaction entre les particules de silicium et l'eau, pour atteindre une réaction substantiellement totale, comme indiqué par la diminution de l'évolution de gaz.

3. Procédé selon la revendication 1 ou la revendication 2, comprenant, en outre, l'étape de la réduction de la teneur en eau du mélange ayant réagi jusqu'à un degré suffisant pour former une masse sèche qui peut, par la suite, être nitrurée.

4. Procédé selon la revendication 3, dans lequel il est ajouté au mélange avant ou après le concassage au moins un agent de nitration.

5. Procédé selon la revendication 4, dans lequel l'agent de nitration est choisi parmi les oxydes de fer, les oxydes de plomb, le carbonyle de nickel, les oxydes de nickel, le carbure de silicium, le graphite, le carbone, les oxydes d'aluminium, CoO, CaF, Li₂O, Na₂O, K₂O, BaO, BN, l'albite (NaAlSi₃O₈), l'orthoclase (KAlSi₃O₈), l'anorthite (CaAl₂Si₂O₈), la néphéline, la syénite, le talc, le borax, le carbonate de sodium, le nitrure de silicium en phase alpha et leurs mélanges.

6. Procédé selon la revendication 4 ou la revendication 5, dans lequel la quantité d'agent de nitration est de 0,1 à 7 % du volume, sur la base de la masse sèche obtenue.

7. Procédé selon l'une quelconque des revendications 3 à 6, dans lequel il est ajouté au mélange avant ou après le concassage au plus 94,5 % du volume d'au moins un matériau de remplissage réfractaire inorganique, choisi parmi les fibres d'alumine, l'oxyde de chrome, la chromite, le carbure de chrome, le carbure de silicium, la magnésie fusionnée, le magnésite cuit à mort, l'alumine fusionnée, l'alumine tabulaire, la mullite, l'alumine calcinée, la forstérite, le chrome-magnésite, l'alundum, le zircon, le nitrure de bore cubique, le diamant, la zircone stabilisée fusionnée, le graphite, les métaux réfractaires, la fibre de céramique, la fibre de mullite, les oxydes des terres rares, les carbures des terres rares, le dioxyde de titane, l'oxyde d'yttrium, le carbure d'yttrium, l'oxyde de calcium, le carbonate de calcium cuit à mort, la dolomie cuite à mort, la calcite cuite à mort, les oxydes de métaux calcinés, les oxydes de métaux fusionnés, l'oxyde d'hafnium, l'oxyde de thorium, l'oxyde d'uranium, le carbure de bore, le carbure de titalum, le carbure de titane, le carbure d'uranium, le carbure de tungstène, le carbure de molybdène, le carbure de zirconium, les spinelles de magnésie-alumine, la bauxite calcinée, le rutile et les nitrures de métaux.

8. Procédé selon l'une quelconque des revendications 3 à 7, dans lequel il est ajouté au mélange avant ou après le concassage au moins un agent d'aide à la densification.

9. Procédé selon la revendication 8, dans lequel l'agent d'aide à la densification est ajouté dans une quantité de 4 à 16 % du volume sur la base de la masse sèche obtenue, l'agent d'aide à la densification étant choisi parmi l'alumine, les oxydes des terres rares, l'oxyde d'yttrium, l'oxyde de magnésium, l'oxyde de zirconium, l'oxyde de lanthane, l'oxyde de titane, l'oxyde de baryum, l'oxyde de strontium, l'oxyde de cérium, l'oxyde de scandium, l'oxyde de bore, l'oxyde de béryllium, l'oxyde de chrome, l'oxyde de calcium, l'oxyde de vanadium, l'oxyde de manganèse, le nitrure de magnésium, le nitrure d'aluminium, MgSi, MgAl₂O₄ et leurs mélanges.

10. Procédé pour la fabrication d'un nitrure de silicium à haute teneur en phase alpha, comprenant la nitration de la masse sèche obtenue par le procédé selon l'une quelconque des revendications 3 à 9, par exposition d'une quantité suffisante de gaz de nitration incluant au moins l'azote, à une température suffisante pendant une longueur de temps suffisante, pour former une masse de nitrure de silicium substantiellement.

11. Procédé pour la fabrication de matériau de nitrure de silicium en phase bêta non densifié comprenant la soumission du nitrure de silicium substantiellement en phase alpha obtenu selon la revendication 10, à une température de 1450 à 2100 °C, pendant une longueur de temps suffisante pour convertir le nitrure de silicium d'un matériau à prédominance de phase alpha, en un matériau de nitrure de silicium à prédominance de phase bêta non densifié.

12. Procédé selon la revendication 11, dans lequel la nitration est exécutée dans un gaz de nitration de 40 à 60 % en moles d'azote, 40 à 60 % en moles d'hélium et 1 à 6 % en moles d'hydrogène, tout en chauffant à partir de 1000 °C à une vitesse de température croissante substantiellement de façon linéaire de 5 à 50 °C par heure, jusqu'à ce qu'une température élevée de 1350 à 1450 °C soit atteinte.

13. Procédé selon la revendication 11, dans lequel la nitration est exécutée dans un gaz de nitration de 90 à 99 % en moles d'azote et 1 à 10 % en moles d'hydrogène, tout en chauffant à partir de 1000 °C, à une vitesse de température croissante substantiellement de façon linéaire de 5 à 50 °C par heure, jusqu'à ce qu'une température élevée de 1350 à 1450 °C soit atteinte.

14. Procédé pour la fabrication de matériau de nitrure de silicium en phase bêta densifié, comprenant la soumission du matériau de nitrure de silicium en phase alpha obtenu selon la revendication 10, à une température de 1450 à 2100 °C pendant une longueur de temps suffisante pour convertir le nitrure de silicium d'un matériau à prédominance de phase alpha, en un matériau de nitrure de silicium à prédominance de phase bêta présentant une diminution dans le volume de masse du nitrure de silicium, en raison de la densification.
